# EUROPEAN PATENT APPLICATION

(11) **EP 2 990 243 A1**
(43) Date of publication of application: **02.03.2016**
(21) Application number: 15180944.9
(22) Date of filing: 13.08.2015
(51) Int. Cl.: B60H 1/00

(54) **HEATING VENTILATION AND AIR-CONDITIONING (HVAC) MODULE WITH A CURVED VALVE**

(30) Priority: 27.08.2014 US 201414469903
(71) Applicant: Delphi Technologies, Inc., Troy, MI 48007-5052 (US)
(72) Inventor: LIPA III, Theodore, LOCKPORT, NY New York 14094 (US)
(74) Representative: BRP Renaud & Partner mbB Rechtsanwälte Patentanwälte Steuerberater

(57) **Abstract**

A heating, ventilation, and air-conditioning (HVAC) module adaptable to balance air delivered by the module to distinct zones includes a valve. The valve is configured to rotate about an axis to variably restrict air delivered to a first zone and a second zone. The valve defines a curved portion characterized as curved about and offset from the axis by an offset amount. An increase to the offset amount decreases a first portion of air delivered to the first zone relative to a second portion of air delivered to the second zone.

## Description

### TECHNICAL FIELD OF INVENTION

This disclosure generally relates to a HVAC module, and more particularly relates to a valve with a curved portion offset from an axis of the valve by an offset amount that determines proportions of air flowing on opposite sides of the valve.

### BACKGROUND OF INVENTION

It is known to use butterfly type valves in heating, ventilation, and air-conditioning (HVAC) modules to variable restrict air flow. As used herein, a butterfly type valve rotates about an axis that is generally centered in a stream of air flowing through a HVAC module. Butterfly valves are advantageous as forces due to air flow are generally balanced, so less mechanical effort or force is need to change or maintain the angular position or orientation of the valve.

It is advantageous for HVAC modules, particularly those used in vehicles (e.g. automobiles), to be adaptable to different applications. For example, it is advantageous if a HVAC module configuration can be readily adapted for use in a pick-up truck cab or two-seat sports car that only has front seats, and a family mini-van that has three rows of seats. For example, a reconfigurable HVAC module has been proposed that uses the same butterfly valve to regulate air delivered to front panel vents located on the dashboard of a pick-up truck that is used to regulate air delivered to both the front panel and a rear zone of a mini-van. However, it has been observed that using the same butterfly valve for the mini-van configured HVAC module may not provide the desired volume of air to the rear zone as the ducting to the rear zone is typically more restrictive than the ducting to the front panel.

### SUMMARY OF THE INVENTION

In accordance with one embodiment, a heating, ventilation, and air-conditioning (HVAC) module adaptable to balance portion of air delivered by the module to distinct zones is provided. The module includes a valve configured to rotate about an axis to variably restrict air delivered to a first zone and a second zone. The valve defines a curved portion characterized as curved about and offset from the axis by an offset amount. An increase to the offset amount decreases a first portion of air delivered to the first zone relative to a second portion of air delivered to the second zone.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a cut-away side view of an HVAV module in accordance with one embodiment;
Fig. 2 is an isometric view of part of the HVAC module of Fig. 1 in accordance with one embodiment; and
Fig. 3 is a prior art example of an HVAC module.

### DETAILED DESCRIPTION

Described herein is a heating, ventilation, and air-conditioning (HVAC) module that makes use of a curved butterfly valve to more readily adapt the HVAC module for use in a variety of vehicles. The adaptability is particularly advantageous as a majority portion of the HVAC module can be used in a wide variety of vehicles, thereby saving on engineering and tooling costs.

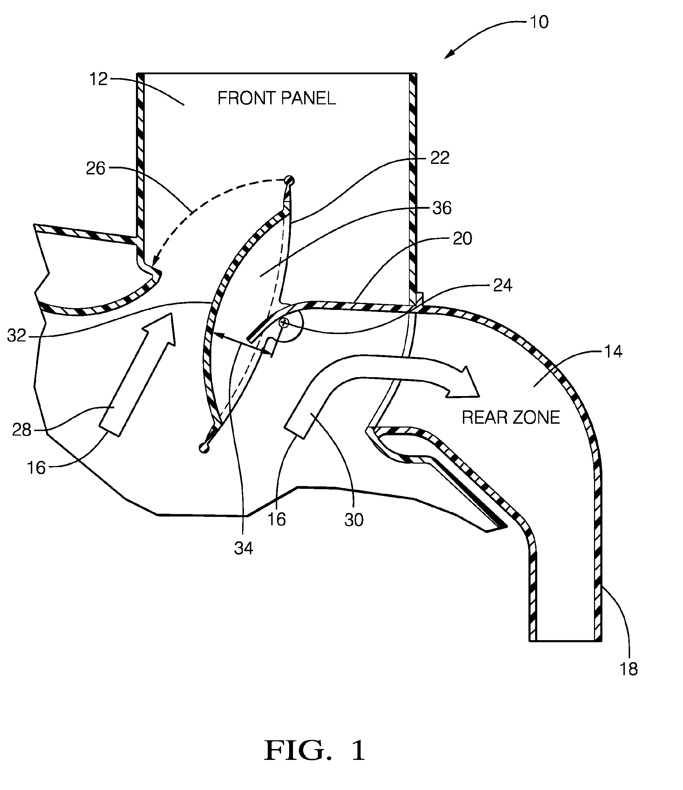

Fig. 1 illustrates a non-limiting example of a HVAC module, hereafter referred to as the module 10. As will become apparent in the description that follows, the module 10 is advantageously adaptable to balance portions of air 16 delivered by the module to distinct zones. By way of example and not limitation, the module 10 may be configured to deliver air to a first zone 12 corresponding to outlet vents on the front panel (i.e. dashboard) of a vehicle, and deliver air to a second zone 14 corresponding to outlet vents in a rear zone of the vehicle such as adjacent to a third row of seats. To adapt the module 10 for use in a vehicle equipped with, for example, only front seats, the module 10 can be readily adapted for that application by removing a duct 18 and a barrier 20 that cooperate to define, at least in part, the second zone 14.

The module 10 includes a curved butterfly type valve, hereafter referred to as the valve 22. The valve 22 is configured to rotate about an axis 24 to variably restrict air delivered to the first zone 12 and a second zone 14. The valve 22 is illustrated in an open state. If the valve 22 in this non-limiting example is rotated in a counterclockwise direction as illustrated by dashed line 26, the valve 22 would be operated into a closed state. It should be evident that rotation of the valve 22 toward the closed state decreases both a first portion 28 and a second portion 30 of the air 16 flowing past the valve 22.

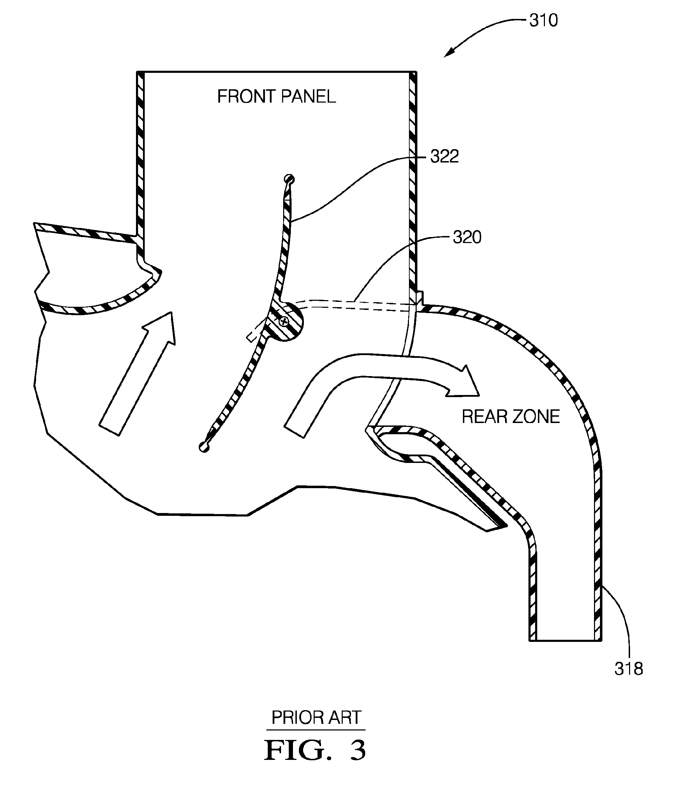

Fig. 3 illustrates an example of prior art example of an HVAC module, hereafter referred to as the known module 310. The known module 310 was proposed as a design that could be adapted for use in various vehicle configurations by removing or keeping in place the duct 318 and the barrier 320. However, it was discovered that the amount of air delivered to the rear zone did not meet customer specifications in some instances. To address this problem, the design of the valve 322 was improved, and this improvement is described herein by the description of the valve 22.

Returning now to Fig. 1, the valve 22 is improved by configuring the valve 22 to define a curved portion 32. The curved portion 32 may be characterized as curved about, and offset from, the axis 24 by an offset amount 34 which is generally characterized as a distance between the axis 24 and the curved surface. It should be apparent that an increase to the offset amount 34 decreases the first portion 28 of air delivered to the first zone 12 relative to the second portion 30 of air delivered to the second zone 14. That is, increasing the offset amount 34 increases the restriction of air flowing through the first zone 12 results in an increase of air flowing toward the second zone, i.e. increases the second portion 14 relative to the first portion 28. As such, the inclusion of the curved portion 32 in the configuration of the valve 22 helps to improve the overall performance of the module by increasing the amount of air delivered to the rear zone (the second portion 30).

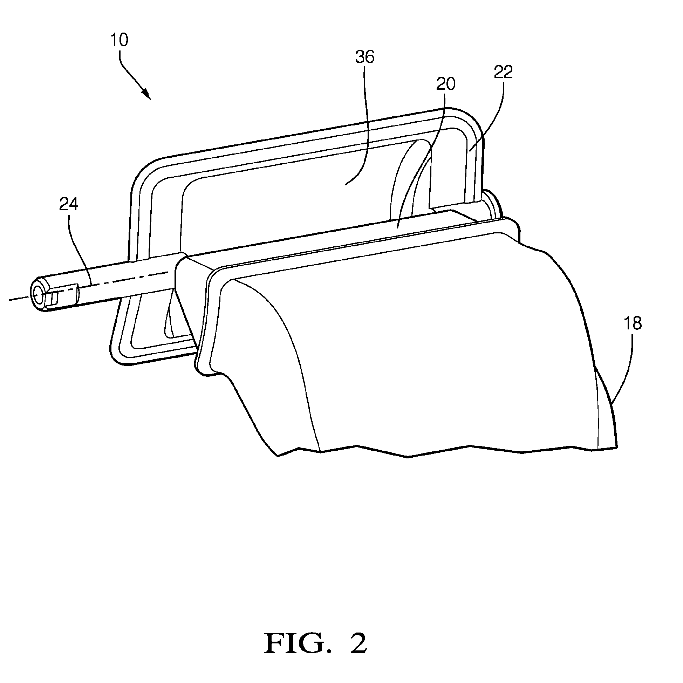

Fig. 2 further illustrates non-limiting features of the module 10. As noted above, the module 10 includes the barrier 20 that helps to segregate the first portion 28 from the second portion 30. Because of the curved portion 32, the valve 22 can be shaped so the barrier 20 reaches to a location proximate to the axis 24. The curved portion 32 is configured to define a cavity 35 so the barrier 20 can be configured to protrude into the cavity 36 and thereby further segregate the first portion 28 from the second portion 30.

In order to modify the module for use in an application that does not have a rear zone, the module 10 is configured such that the barrier 20 and the duct 18 can be omitted or removed, and the opening created by the removal of the duct 18 can be sealed by a cover (not shown). As such, the module 10 is adaptable for applications that deliver air to only the first zone 12. It should be recognized that for this configuration both the first portion 28 and the second portion 30 would be directed to the first zone 12.

Accordingly, a heating, ventilation, and air-conditioning (HVAC) module (the module 10) and a curved butterfly valve (the valve 22) are provided. The module 10 has a specially shaped front vent valve that is tunable to restrict the front Panel airflow (i.e. reduce the first portion 28) and thereby deliver the desired amount of airflow (i.e. the second portion 30) to the Rear Zone. The design of the valve may be characterized as a semi-shaft less design that provides the cavity 36 in order to allow for a "scoop" on the Rear Zone duct (the duct 18) to help port increased airflow to the Rear Zone. Another benefit of this design is that the valve is tunable by varying the offset amount 34 so that the valve 22 is interchangeable with a traditional (flat) vent valve as shown in Fig. 3, or with other valves having different offset amounts. This tunable aspect can be used to balance the restriction between the front and rear zones. This feature enables a common HVAC module architecture to be used in vehicles with or without rear zone delivery while using the same HVAC cases or housings.

While this invention has been described in terms of the preferred embodiments thereof, it is not intended to be so limited, but rather only to the extent set forth in the claims that follow.

## Claims

1. A heating, ventilation, and air-conditioning (HVAC) module adaptable to balance
portions of air delivered by the module to distinct zones, said module comprising: a valve configured to rotate about an axis to variably restrict air delivered to a first zone
and a second zone, wherein the valve defines a curved portion characterized as curved about and offset from the axis by an offset amount, wherein an increase to the offset amount decreases a first portion of air delivered to the first zone relative to a second portion of air delivered to the second zone.

2. The module in accordance with claim 1, wherein rotation of the valve toward a closed state decreases both the first portion and the second portion.

3. The module in accordance with claim 1, wherein the module includes a barrier located proximate to the axis and configured to segregate the first portion from the second portion.

4. The module in accordance with claim 3, wherein the curved portion defines a cavity, and the barrier is configured to protrude into the cavity.

5. The module in accordance with claim 3, wherein the module is configured such that if the barrier is removed, the module is adaptable for applications that deliver air to only the first zone.
